(19) **Europäisches Patentamt European Patent Office Office européen des brevets**

(11) **EP 3 691 922 B1**

(12) **FASCICULE DE BREVET EUROPEEN**

(45) Date de publication et mention
de la délivrance du brevet:
**08.04.2026  Bulletin 2026/15**

(21) Numéro de dépôt: **18785547.3**

(22) Date de dépôt: **02.10.2018**

(51) Classification Internationale des Brevets (IPC):
**B60K 6/442** (2007.10)    **B60W 20/20** (2016.01)
**B60W 10/06** (2006.01)    **B60W 10/08** (2006.01)
**B60W 10/11** (2012.01)    **B60K 6/547** (2007.10)
**B60W 30/19** (2012.01)    **B60W 20/10** (2016.01)

(52) Classification Coopérative des Brevets (CPC):
**B60K 6/442; B60K 6/547; B60W 10/06;
B60W 10/08; B60W 10/11; B60W 20/10;
B60W 30/19;** B60W 20/00; B60W 2710/0666;
B60W 2710/0672; B60W 2710/083;
B60W 2710/085; B60W 2710/1005; Y02T 10/62;
Y02T 10/70;                                    (Cont.)

(86) Numéro de dépôt international:
**PCT/EP2018/076829**

(87) Numéro de publication internationale:
**WO 2019/068727 (11.04.2019 Gazette 2019/15)**

(54) **PROCÉDÉ DE PILOTAGE D'UN GROUPE MOTOPROPULSEUR DE VÉHICULE AUTOMOBILE**

VERFAHREN ZUR STEUERUNG DER ANTRIEBSEINHEIT EINES KRAFTFAHRZEUGS

CONTROL METHOD FOR A VEHICLE POWERTRAIN

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **05.10.2017  FR 1759335**

(43) Date de publication de la demande:
**12.08.2020  Bulletin 2020/33**

(73) Titulaires:
• **Renault s.a.s**
  **92100 Boulogne Billancourt (FR)**
• **Nissan Motor Co., Ltd.**
  **Kanagawa 220-8623 (JP)**

(72) Inventeurs:
• **MERIENNE, Ludovic**
  **91190 Gif-sur-Yvette (FR)**
• **BEN-BELDI, Nesrine**
  **75017 Paris (FR)**

(74) Mandataire: **Renault Group**
  **Renault s.a.s.**
  **1 avenue du Golf**
  **FR TCR AVA 055**
  **78084 Guyancourt Cedex (FR)**

(56) Documents cités:
WO-A1-2016/208029      WO-A1-2016/208029
FR-A1- 3 022 495        FR-A1- 3 022 495

(52) Classification Coopérative des Brevets (CPC):
(Cont.)Y02T 10/72

(52) Classification Coopérative des Brevets (CPC):
(Cont.)Y02T 10/72

**EP 3 691 922 B1**

## Description

L'invention concerne le contrôle des transmissions automatiques de groupe motopropulseur (GMP) de véhicule, électrique ou hybride, comportant une boîte de vitesses qui regroupe le couple de plusieurs actionneurs (moteurs thermiques et machines électriques) en direction des roues du véhicule, sur différents rapports de transmission, par l'intermédiaire d'un différentiel.

Plus précisément, elle a pour objet un procédé de pilotage d'un groupe motopropulseur de véhicule automobile comprenant un moteur à combustion interne, une machine électrique principale, une machine électrique secondaire et au moins une boîte de vitesses à crabots pilotés comprenant un premier arbre primaire connecté mécaniquement avec le moteur à combustion interne et avec la machine électrique secondaire, un second arbre primaire connecté mécaniquement avec la machine électrique principale et un arbre secondaire.

L'invention s'applique en particulier aux groupes motopropulseurs de ce type, dans lesquels l'engagement et le désengagement des rapports est assuré par des systèmes de couplage pilotés sans synchroniseur, à crabots ou dents plates, appelés aussi « clabots », mobiles axialement sur un arbre. Les crabots sont pilotés par l'intermédiaire de fourchettes de commande en direction de pignons de vitesses fixes axialement, tournant fou sur leur arbre. L'engagement des crabots mobiles sur les pignons, met en prise l'arbre et le pignon, pour transmettre le couple aux roues sur le rapport de transmission engagé.

La publication FR 3 007 696, à laquelle on pourra se référer, décrit une architecture de transmission hybride à trois arbres et deux machines électriques, dont une machine principale et une machine secondaire. La transmission utilise trois systèmes de couplage à crabots spécifiques. C'est une boîte de vitesses de type robotisée, possédant un comportement mécanique similaire à une boîte manuelle. Les changements de rapport s'effectuent de façon automatisée, à l'aide d'un système d'actionnement permettant d'engager et de désengager les crabots.

Avec une telle architecture, il est possible d'engager des rapports thermiques purs dans lesquels seul le premier arbre primaire est connecté mécaniquement à l'arbre secondaire, des rapports électriques purs dans lesquels seul le second arbre primaire est connecté mécaniquement à l'arbre secondaire et des rapports hybrides dans lesquels les premiers et second arbres primaires sont tous deux connectés mécaniquement à l'arbre secondaire. Dans le cas d'un rapport hybride, un rapport de transmission thermique correspond à la liaison mécanique entre le premier arbre primaire et l'arbre secondaire, et un rapport de transmission électrique correspond à la liaison mécanique entre le second arbre primaire et l'arbre secondaire.

Lorsque l'on souhaite quitter un rapport d'entrée hybride pour engager un rapport de sortie hybride, le rapport d'entrée et le rapport de sortie présentant des rapports de transmission électrique différents, on met en œuvre le procédé suivant. Dans un premier temps, on bascule du couple du second arbre primaire sur le premier arbre primaire. Lorsque le couple du second arbre primaire est nul, on désengage le rapport de transmission électrique du rapport d'entrée. Ensuite, on synchronise le régime de rotation de la machine électrique principale pour préparer une phase ultérieure d'engagement du rapport de transmission électrique du rapport de sortie. Lorsque cet engagement est terminé, on bascule du couple du premier arbre primaire sur le second arbre primaire.

Pour basculer du couple du second arbre primaire sur le premier arbre primaire, une solution généralement utilisée consiste à diminuer le couple de la machine électrique principale et à augmenter concomitamment le couple du moteur à combustion interne. Une telle solution n'apporte toutefois pas pleinement satisfaction. En effet, si le couple de la machine électrique principale peut diminuer très rapidement, le couple du moteur à combustion interne ne peut pas augmenter aussi rapidement. Si l'on réduit le plus rapidement possible le couple délivré par la machine électrique principale, le couple fourni à l'arbre secondaire diminue. Il s'ensuit l'apparition de phénomènes pouvant être perçus désagréablement par les utilisateurs, comme des trous d'accélération, des chocs ou à-coups, des ralentissements, des effets de « salut », etc.

Pour éviter ces désagréments, on peut choisir de limiter la vitesse de diminution du couple de la machine électrique principale en fonction du taux d'accroissement maximal du couple du moteur à combustion interne. Toutefois, on augmente la durée du changement de rapport de vitesses.

Une autre solution pour basculer du couple du second arbre primaire sur le premier arbre primaire consiste à compenser la diminution du couple de la machine électrique principale par une augmentation du couple de la machine électrique secondaire. Cependant, la machine électrique secondaire délivre généralement moins de puissance mécanique que la machine électrique principale. Dans ces conditions, la machine électrique secondaire ne peut compenser le couple de la machine électrique principale. Ainsi, il apparait un trou de couple ressenti comme un désagrément par les utilisateurs du véhicule.

Par la publication FR 3 022 495, on connait une méthode de compensation temporaire du couple d'une machine électrique par le moteur thermique d'une transmission hybride, comportant une première phase de bascule de couple entre deux arbres primaires de la transmission, une phase de désengagement d'un premier rapport électrique, une phase de synchronisation de la machine électrique, une phase d'engagement d'un deuxième rapport électrique, et une deuxième phase de bascule de couple inverse à la première, entre les deux arbres primaires de la transmission.

La durée et l'agrément des changements de rapports réalisés, selon cette méthode peuvent être optimisés Au vu de ce qui précède, l'invention a pour but de fournir un procédé de pilotage d'un groupe motopropulseur de véhicule automobile palliant les inconvénients précités.

Plus particulièrement, l'invention vise à permettre le changement de rapport de vitesses entre un rapport d'entrée hybride et un rapport de sortie hybride présentant un rapport de transmission électrique différent de celui du rapport d'entrée, dans lequel la durée du changement de rapport est minimale et occasionnant le moins de désagréments possibles pour les utilisateurs du véhicule.

À cet effet, il est proposé un procédé de pilotage d'un groupe motopropulseur de véhicule automobile comprenant un moteur à combustion interne, une machine électrique principale, une machine électrique secondaire et au moins une boîte de vitesses à crabots pilotés comprenant un premier arbre primaire connecté mécaniquement avec le moteur à combustion interne et avec la machine électrique secondaire, un second arbre primaire connecté mécaniquement avec la machine électrique principale et un arbre secondaire, le procédé comprenant une première phase de bascule du couple du second arbre primaire sur le premier arbre primaire, une deuxième phase de désengagement du rapport de transmission électrique d'un rapport d'entrée, une troisième phase de synchronisation du régime de rotation de la machine électrique principale, une quatrième phase d'engagement du rapport de transmission électrique d'un rapport de sortie, et une cinquième phase de bascule du couple du premier arbre primaire sur le second arbre primaire.

Selon une caractéristique générale de ce procédé, la première phase comprend une première étape de calcul d'une première valeur cible de puissance et une deuxième étape d'augmentation de la puissance délivrée par le moteur à combustion interne jusqu'à la première valeur cible, la première valeur cible étant déterminée de telle sorte que, à la fin de la deuxième étape, la puissance délivrée par la machine électrique principale peut être entièrement compensée par une augmentation de la puissance délivrée par la machine électrique secondaire.

Ainsi, on annule et on compense le couple de la machine électrique principale selon deux dynamiques de bascule différentes, en l'espèce une première dynamique lente pour éviter l'apparition de désagréments tels que des trous d'accélération et une seconde dynamique rapide pour limiter la durée du changement de rapport.

Selon un mode de mise en œuvre particulier, au cours de la deuxième étape, l'on diminue la puissance délivrée par la machine électrique principale, le taux de diminution de la puissance délivrée par la machine électrique principale étant sensiblement égal au taux d'accroissement de la puissance délivrée par le moteur à combustion interne.

De manière avantageuse, lors de la première étape, on détermine en outre la puissance supplémentaire pouvant être délivrée par la machine électrique secondaire et on met en œuvre la deuxième étape seulement si ladite puissance supplémentaire déterminée est strictement inférieure à une puissance à réaliser par la machine électrique principale si aucun changement de rapport n'est demandé.

Avec un tel mode de mise en œuvre, on s'abstient de modifier le pilotage du couple du moteur à combustion interne si l'annulation du couple du second arbre primaire peut être intégralement compensée par la machine électrique secondaire. On limite ainsi au maximum la durée du changement de rapport tout en s'assurant d'éviter l'apparition de trous d'accélération.

Avantageusement, lors de la première étape, on détermine la première valeur cible en appliquant la formule :

$$P_{ice\_cible\_e03} = P_{mep\_no} + P_{ice\_no} - P_{hsg\_pot}$$

où $P_{ice\_cible\_e03}$ désigne la première valeur cible,

$P_{mep\_no}$ désigne la puissance à réaliser par la machine électrique principale si aucun changement de rapport n'est demandé,

$P_{ice\_no}$ désigne la puissance à réaliser par le moteur à combustion interne si aucun changement de rapport n'est demandé, et

$P_{hsg\_pot}$ désigne la puissance supplémentaire pouvant être délivrée par la machine électrique secondaire.

Dans un mode de mise en œuvre, lors de la seconde étape, on augmente le couple du moteur à combustion interne à un taux d'accroissement égal au taux maximal d'accroissement du couple du moteur à combustion interne.

On peut en outre prévoir que ladite première phase comprend une troisième étape de calcul d'une deuxième valeur cible de puissance délivrée par le moteur à combustion interne, d'une troisième valeur cible de puissance délivrée par la machine électrique principale et d'une quatrième valeur cible de puissance délivrée par la machine électrique secondaire.

Grâce à cette troisième étape, on prévoit comment compenser le couple restant du second arbre primaire.

Dans un mode de mise en œuvre, lors de ladite troisième étape, on détermine les valeurs cibles en appliquant les relations suivantes :

$$P_{ice\_cible\_e06} = P_{ice\_cible\_e03} \, ,$$

$$P_{hsg\_cible\_e06} = P_{hsg\_max} \, ,$$

et

$$P_{mep\_cible\_e06} = 0 \, ,$$

où $P_{ice\_cible\_e06}$ désigne la deuxième valeur cible,

$P_{mep\_cible\_e06}$ désigne la troisième valeur cible,

$P_{hsg\_cible\_e06}$ désigne la quatrième valeur cible,

$P_{hsg\_max}$ désigne la puissance mécanique maximale pouvant être fournie par la machine électrique secondaire, et

$P_{ice\_cible\_e03}$ désigne la première valeur cible.

Un tel mode de mise en œuvre permet de limiter le bruit, la consommation de carburant et les émissions de polluants occasionnés par le moteur à combustion interne lors du changement de rapport.

Dans un autre mode de mise en œuvre, lors de ladite troisième étape, on détermine les valeurs cibles en appliquant les relations suivantes :

$$P_{ice\_cible\_e08} = \min(P_{ice\_max}, P_{ice\_no} + P_{mep\_no}) \, ,$$

$$P_{mep\_cible\_e08} = 0 \, ,$$

$$P_{hsg\_cible\_e08} = P_{roue} - P_{ice\_cible\_e08} \, ,$$

et

où $P_{ice\_cible\_e08}$ désigne la deuxième valeur cible,

$P_{mep\_cible\_e08}$ désigne la troisième valeur cible,

$P_{hsg\_cible\_e08}$ désigne la quatrième valeur cible,

$P_{ice\_no}$ désigne la puissance à réaliser par le moteur à combustion interne si aucun changement de rapport n'est demandé,

$P_{mep\_no}$ désigne la puissance à réaliser par la machine électrique principale si aucun changement de rapport n'est demandé,

$P_{ice\_max}$ désigne la puissance mécanique maximale pouvant être fournie par le moteur à combustion interne, et

$P_{roues}$ désigne la consigne de puissance à fournir aux roues par le groupe motopropulseur.

Dans un tel mode de mise en œuvre, on préserve l'état de charge d'une batterie de stockage d'énergie électrique alimentant les machines électriques du groupe motopropulseur.

De manière avantageuse, lors de la troisième étape, on détermine la deuxième valeur cible, la troisième valeur cible et la quatrième valeur cible, en mettant en œuvre un système d'équations, et dans lequel on choisit ledit système d'équations parmi au moins deux systèmes d'équations distincts, le choix du système d'équations étant mis en œuvre en fonction d'au moins un critère choisi parmi un état de charge d'une batterie électrique de stockage du véhicule et un niveau de bruit maximum du moteur à combustion interne.

Par un tel choix du système d'équations, on tient compte des attentes du conducteur pour compenser le couple restant du second arbre primaire.

De manière avantageuse, la première phase comprend une quatrième étape d'ajustement des puissances délivrées par le moteur à combustion interne, la machine électrique principale et la machine électrique secondaire jusqu'aux deuxième, troisième, et quatrième valeurs cibles respectives, et dans lequel lors de la quatrième étape, l'on diminue la puissance délivrée par la machine électrique principale à un taux de variation égal au taux maximal de diminution du couple de la machine électrique principale.

D'autres buts, caractéristiques et avantages de l'invention apparaîtront à la lecture de la description suivante, donnée uniquement à titre d'exemple non limitatif, et faite en référence aux dessins annexés sur lesquels :

- la figure 1 est un exemple d'architecture de groupe motopropulseur hybride simplifié,
- la figure 2 regroupe les courbes de passage de vitesse de la boîte de vitesses du groupe motopropulseur de la figure 1,
- la figure 3 est un exemple de mise en œuvre de procédé de pilotage selon l'invention, et
- la figure 4 est un graphe illustrant l'évolution du couple délivré par les éléments du groupe motopropulseur de la figure 1 au cours du procédé de la figure 3.

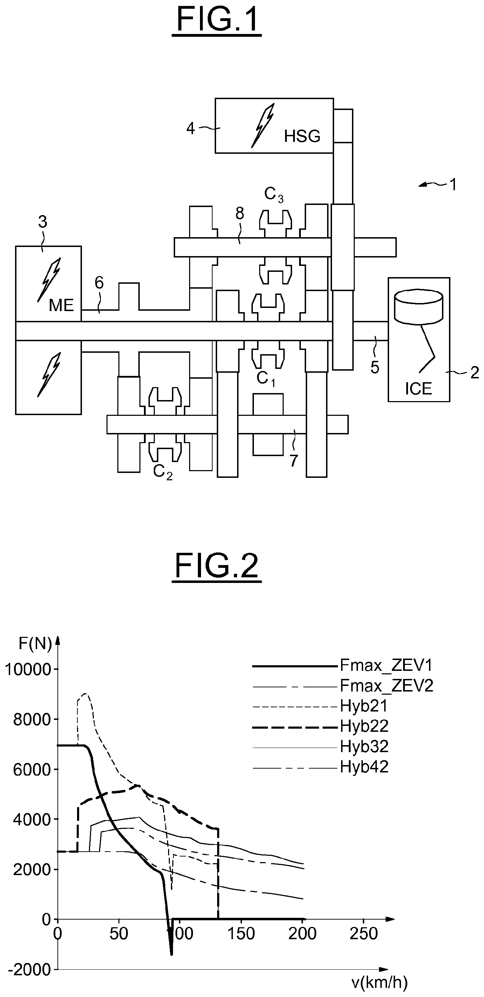

La figure 1 est un schéma fonctionnel de groupe motopropulseur (GMP) hybride 1, à trois arbres et deux machines électriques, utilisant trois systèmes de couplage à crabots, dont le fonctionnement est illustré par la publication citée. Le groupe motopropulseur 1 comporte trois actionneurs, en l'espèce un moteur à combustion interne 2 (ICE), une machine électrique principale 3 (MEP) et une machine électrique secondaire 4 ou alterno-démarreur (HSG). Le groupe motopropulseur 1 comprend un arbre primaire plein 5 relié au moteur 2, un arbre primaire creux 6 relié à la machine électrique principale 3, un arbre secondaire 7, et un arbre de renvoi 8 relié à la machine électrique secondaire 4. Les rapports sont enclenchés par trois coupleurs à crabots C1, C2, C3, dépourvus de synchroniseurs mécaniques.

La boîte de vitesses regroupe le couple du moteur 2, de la machine électrique principale 3, et de la machine électrique secondaire 4 sur l'arbre secondaire 7, en direction des roues du véhicule. Les changements de rapport s'effectuent sous le contrôle des trois coupleurs à crabots C1, C2, C3, disposés respectivement sur l'arbre primaire plein 5, sur l'arbre secondaire 6 et sur l'arbre de transfert 8. Le premier coupleur, dit coupleur primaire C1, placé sur l'arbre primaire plein 5, permet d'enclencher un rapport de transmission thermique ICE4 long à droite, et de coupler les deux arbres primaires à gauche. Le deuxième coupleur, dit coupleur secondaire C2, placé sur l'arbre secondaire, permet d'enclencher deux rapports de transmission électrique EV1 et EV2. Le troisième coupleur, dit coupleur de transfert C3, placé sur l'arbre de renvoi 8, permet de transférer le couple de la machine électrique secondaire sur l'arbre secondaire 7 (à droite), ou sur l'arbre primaire creux 6 (à gauche).

La boîte présente deux rapports de transmission électriques EV1 et EV2 pour le mouvement issu de la machine électrique principale 3, et quatre rapports de transmission thermiques ICE1, ICE2, ICE3 et ICE4 pour le mouvement issu de l'ensemble de la machine électrique secondaire 4 et du moteur à combustion interne 2. Leur combinaison permet à la boîte de disposer de 15 rapports de vitesses. Chaque rapport de vitesses transmet une force maximum à la roue en fonction de la vitesse de déplacement du véhicule. A titre d'exemple, on a représenté sur la figure 2 les courbes de passage pour certains d'entre eux. La vitesse de déplacement du véhicule V est exprimée en kilomètres/heure. La force aux roues maximale F en fonction de la vitesse, est exprimée en Newton (N), pour les deux vitesses électriques (ZEV1 et ZEV2), et quatre vitesses hybrides, appelés respectivement Hyb21, Hyb22, Hyb32, Hyb42. Le premier chiffre indique le rapport de transmission thermique de la boîte de vitesses. Le deuxième indique son rapport de transmission électrique.

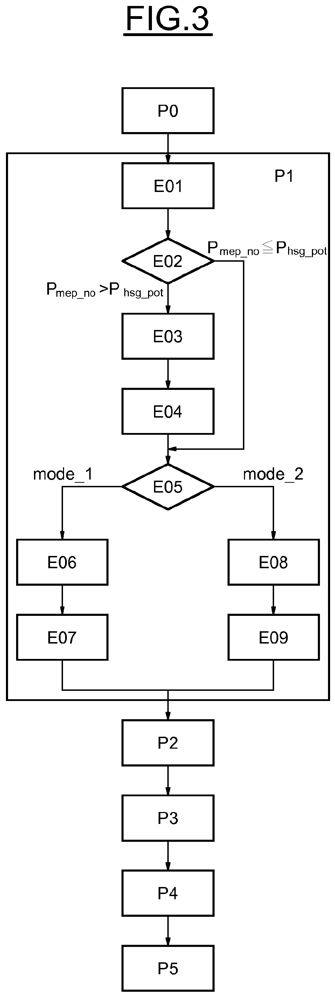

En référence à la figure 3, on a schématiquement représenté un exemple de procédé pouvant être mis en œuvre pour piloter le groupe motopropulseur de la figure 1. Le procédé de la figure 3 est destiné à être mis en œuvre lors d'un changement de rapport de vitesses depuis un rapport de vitesses d'entrée vers un rapport de vitesse de sortie. Plus précisément, le rapport de vitesses d'entrée et le rapport de vitesses de sortie sont deux rapports hybrides de la boîte de vitesses présentant chacun un rapport de transmission électrique distinct. En d'autres termes, les couples (rapport d'entrée, rapport de sortie) peuvent être (Hyb21, Hyb22) et (Hyb22, Hyb21). Par exemple, la description du procédé qui va suivre sera faite dans le cas d'un changement de rapport de vitesses depuis un rapport d'entrée Hyb21 vers un rapport de sortie Hyb22.

Lors d'un état initial du procédé, la boîte de vitesse du groupe motopropulseur 1 est engagée selon le rapport de vitesses Hyb21. En d'autres termes, le rapport de transmission thermique ICE2 et le rapport de transmission électrique EV1 sont engagés.

À tout instant, on note :

$\omega_{ice}$ la vitesse de rotation du moteur à combustion interne 2,
$\omega_{mep}$ la vitesse de rotation de la machine électrique principale 3,
$\omega_{hsg}$ la vitesse de rotation de la machine électrique secondaire 4,
$\omega_7$ la vitesse de rotation de l'arbre secondaire 7,
$T_{ice}$ le couple délivré par le moteur à combustion interne 2,
$T_{mep}$ le couple délivré par la machine électrique principale 3,
$T_{hsg}$ le couple délivré par la machine électrique secondaire 4,
$T_7$ le couple sur l'arbre secondaire 7,
$P_{ice}$ la puissance du moteur à combustion interne 2,
$P_{mep}$ la puissance de la machine électrique principale 3,
$P_{hsg}$ la puissance de la machine électrique secondaire 4, et
$P_7$ la puissance reçue par l'arbre secondaire 7.

Le procédé comprend une phase d'initialisation P0 de détection d'une consigne de changement de rapport de vitesses depuis un rapport entrant hybride vers un rapport de sortie hybride présentant respectivement deux rapports de transmission électrique différents. Dans le cas illustré, on détecte une consigne de changement de rapport de vitesse depuis le rapport d'entrée Hyb21 vers le rapport de sortie Hyb22. Tant qu'une telle consigne n'est pas détectée, on répète de manière périodique la phase P0. Dès que cette consigne est détectée, on applique une phase P1.

La phase P1 a pour but de mettre en œuvre une bascule du couple de l'arbre 6 sur l'arbre 5 en vue du désengagement du rapport de transmission électrique EV1.

La phase P1 comprend une première étape E01 de calcul d'une puissance mécanique disponible $P_{hsg\_pot}$. La puissance $P_{hsg\_pot}$ correspond à la puissance additionnelle pouvant être fournie par la machine électrique secondaire 4 par rapport à la puissance mécanique déjà fournie à l'état initial du procédé. La puissance se calcule en appliquant l'équation suivante :

$$P_{hsg\_pot} = P_{hsg\_\max} - P_{hsg\_no} \,, \qquad (1)$$

où $P_{hsg\_max}$ représente la puissance mécanique maximale pouvant être délivrée par la machine électrique secondaire 4, et $P_{hsg\_no}$ représente la puissance à réaliser par la machine électrique secondaire 4 en dehors du changement de rapport. En d'autres termes, la puissance $P_{hsg\_no}$ correspond à la puissance de consigne de la machine électrique secondaire 4 immédiatement avant la fin de la phase d'initialisation P0.

La phase P1 comprend une deuxième étape E02 de test dans laquelle on détermine si une puissance $P_{mep\_no}$ de la machine électrique principale 3 en dehors du changement de rapport est inférieure à la puissance $P_{hsg\_pot}$. En d'autres termes, on détermine au cours de l'étape E02 si la puissance mécanique délivrée par la machine électrique principale 3 à l'état initial peut être intégralement compensée par une puissance additionnelle délivrée par la machine électrique secondaire 4.

Si $P_{mep\_no} > P_{hsg\_pot}$, alors on met en œuvre une étape E03 suivante. Si $P_{mep\_no} \leq P_{hsg\_pot}$, alors on passe directement à une étape E05.

L'étape E03 a pour but de calculer un triplet de puissances cibles des actionneurs du groupe motopropulseur 1. Plus particulièrement, on détermine au cours de l'étape E03 une puissance cible $P_{ice\_cible\_e03}$ du moteur 2, une puissance cible $P_{mep\_cible\_e03}$ de la machine électrique principale 3 et une puissance cible $P_{hsg\_cible\_e03}$ de la machine électrique secondaire 4. Ces puissances sont calculées en mettant en œuvre les équations suivantes :

$$P_{ice\_cible\_e03} = P_{mep\_no} + P_{ice\_no} - P_{hsg\_pot} \qquad (2)$$

$$P_{mep\_cible\_e03} = P_{hsg\_pot} \qquad (3)$$

$$P_{hsg\_cible\_e03} = P_{hsg\_no} \qquad (4),$$

où $P_{ice\_no}$ désigne la puissance du moteur à combustion interne 2 en dehors du changement de rapport.

On met ensuite en œuvre une étape E04 de modification des couples $T_{ice}$ et $T_{mep}$. Le couple $T_{ice}$ est modifié de telle sorte que la puissance $P_{ice}$ converge vers la puissance cible $P_{ice\_cible\_e03}$. De même, et de manière concomitante, le couple $T_{mep}$ est modifié de telle sorte que la puissance $P_{mep}$ converge vers la puissance cible $P_{mep\_cible\_e03}$. Plus précisément, les couples $T_{ice}$ et $T_{mep}$ sont pilotés de telle sorte que :

$$\left| \frac{\Delta T_{mep}}{\Delta t} \right| = \frac{R_{EV1}}{R_{ICE2}} \cdot \frac{\Delta T_{ice}}{\Delta t} \,, \qquad (5)$$

où $R_{EV1}$ désigne le rapport de transmission électrique EV1 et $R_{ICE2}$ désigne le rapport de transmission thermique ICE2.

Au cours de l'étape E04, le taux d'accroissement du couple $T_{ice}$ est défini comme suit :

$$\frac{\Delta T_{ice}}{\Delta t} = Tx_{ice\_\max} \qquad (6)$$

où $Tx_{ice\_max}$ représente le taux maximal d'accroissement du couple du moteur à combustion interne 2. Ce taux pourra être obtenu à l'aide d'une cartographie (non représentée) dans laquelle sont stockées des valeurs du taux $Tx_{ice\_max}$ en fonction d'un point de fonctionnement du moteur à combustion interne 2.

De cette manière, au cours de l'étape E04, on commence à compenser l'annulation du couple de l'arbre 6 par une augmentation du couple du moteur à combustion interne 2. Grâce au choix des cibles selon les équations (2), (3) et (4) et au pilotage selon les équations (5) et (6), on minimise la durée de l'étape E04 tout en évitant l'apparition d'un trou d'accélération.

Lorsque, suite à l'augmentation du couple $T_{ice}$ et à la diminution du couple $T_{mep}$, la puissance $P_{ice}$ a atteint la puissance cible $P_{ice\_cible\_e03}$ et la puissance $P_{mep}$ a atteint la puissance cible $P_{mep\_cible\_e03}$, l'étape E04 est terminée.

On applique ensuite une étape E05 de détermination d'un mode de fonctionnement du groupe motopropulseur 1. Si, au cours de l'étape E05, il est déterminé que le groupe motopropulseur 1 fonctionne selon un premier mode de fonctionnement, on applique une étape E06. S'il est déterminé que le groupe motopropulseur 1 fonctionne selon un second mode de fonctionnement, on applique une étape E08.

Au cours de l'étape E06, on calcule un deuxième triplet de puissances cibles des actionneurs du groupe motopropulseur 1. Plus particulièrement, on détermine au cours de l'étape E06 une puissance cible $P_{ice\_cible\_e06}$ du moteur 2, une puissance cible $P_{mep\_cible\_e06}$ de la machine électrique principale 3 et une puissance cible $P_{hsg\_cible\_e06}$ de la machine électrique secondaire 4. Ces puissances sont calculées en mettant en œuvre les équations suivantes :

$$P_{ice\_cible\_e06} = P_{ice\_cible\_e03} \qquad (7)$$

$$P_{hsg\_cible\_e06} = P_{hsg\_max} \qquad (8)$$

$$P_{mep\_cible\_e06} = 0 \qquad (9)$$

On applique ensuite une étape E07 de modification des couples $T_{ice}$, $T_{mep}$ et $T_{hsg}$. Comme dans l'étape E04, le couple $T_{ice}$, respectivement $T_{mep}$, est modifié de telle sorte que la puissance $P_{ice}$, respectivement $P_{mep}$, converge vers la puissance cible $P_{ice\_cible\_e06}$, respectivement $P_{mep\_cible\_e06}$.

En cours de l'étape E07, le taux de diminution des couples $T_{mep}$ et $T_{ice}$ est défini comme suit :

$$\left| \frac{\Delta T_{mep}}{\Delta t} \right| = Tx_{mep\_max} , \qquad (10)$$

$$\frac{\Delta T_{ice}}{\Delta t} = Tx_{ice\_max} \qquad (11)$$

où $Tx_{mep\_max}$ représente le taux maximal de diminution du couple de la machine électrique principale 3.

Lorsque les couples $T_{ice}$, $T_{mep}$ et $T_{hsg}$ ont été modifiés de telle sorte que les puissances $P_{ice}$, $P_{mep}$ et $P_{hsg}$ ont respectivement atteint les puissances cibles $P_{ice\_cible\_e06}$, $P_{mep\_cible\_e06}$ et $P_{hsg\_cible\_e06}$, l'étape E07 est terminé.

Les étapes E08 et E09 sont semblables aux étapes E06 et E07 respectives. L'étape E08 diffère de l'étape E06 en ce que l'on calcule un troisième triplet de puissances cibles des actionneurs du groupe motopropulseur 1 en appliquant les équations suivantes :

$$P_{ice\_cible\_e08} = \min(P_{ice\_max}, P_{ice\_no} + P_{mep\_no}) \qquad (12)$$

$$P_{mep\_cible\_e08} = 0 \qquad (13)$$

$$P_{hsg\_cible\_e08} = P_{roue} - P_{ice\_cible\_e08} \qquad (14),$$

où $P_{ice\_max}$ désigne la puissance mécanique maximale pouvant être fournie par le moteur à combustion interne 2, et $P_{roues}$ désigne la consigne de puissance à fournir aux roues par le groupe motopropulseur 1.

Lorsqu'à la suite des variations des couples $T_{ice}$, $T_{mep}$ et $T_{hsg}$, les puissances $P_{ice}$, $P_{mep}$ et $P_{hsg}$ ont respectivement atteint les puissances cibles $P_{ice\_cible\_e08}$, $P_{mep\_cible\_e08}$ et $P_{hsg\_cible\_e08}$, l'étape E09 est terminée.

La phase P1 est terminée lorsque l'une des étapes E07 et E09 est terminée. A l'issue de la phase P1, le couple $T_{mep}$ sur l'arbre primaire creux 6 est nul.

On applique ensuite une phase P2 de désengagement du rapport de transmission électrique EV1. Au cours de cette phase, on manipule le coupleur C2 de manière à désactionner le crabotage du pignon fou assurant le rapport de transmission EV1. A l'issue de la phase P2, l'arbre 6 est déconnecté mécaniquement de l'arbre 7.

On applique ensuite une phase P3 de synchronisation de l'arbre primaire creux 6. Au cours de cette phase, on modifie l'alimentation de la machine électrique principale 3 de telle sorte que la vitesse $\omega_{mep}$ soit synchronisée par rapport à la vitesse $\omega_7$ réduite par le rapport de transmission électrique EV2 :

$$\omega_{mep} = R_{EV2}.\omega_7 , \qquad\qquad (15)$$

où $R_{EV2}$ représente le rapport de transmission électrique EV2.

On met ensuite en œuvre une phase P4 d'engagement du rapport de transmission électrique EV2. Au cours de cette phase, on manipule le coupleur à crabots C2 de manière à actionner le crabotage du pignon fou correspondant au rapport de transmission électrique EV2. À l'issue de la phase P4, la boîte de vitesses est engagée selon le rapport hybride Hyb22.

On met alors en œuvre une phase P5 de bascule du couple de l'arbre 5 sur l'arbre 6. On pilote de cette manière le groupe motopropulseur 1 vers une sortie du changement de rapport de vitesses. A l'issue de la phase P5, le procédé est terminé.

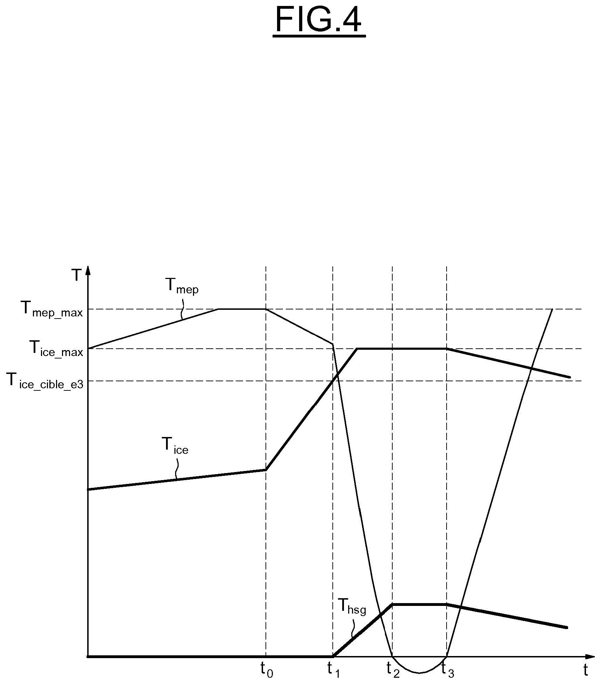

En référence à la figure 4, on a schématiquement représenté les évolutions des couples $T_{ice}$, $T_{mep}$ et $T_{hsg}$ en fonction du temps t au cours du procédé de la figure 3.

Sur le graphe de la figure 4, l'instant $t_0$ correspond à l'instant de fin de la phase d'initialisation P0. L'instant $t_1$ correspond à l'instant de fin de l'étape E04 de la phase P1. L'instant $t_2$ correspond à l'instant de fin de la phase P2. L'instant $t_3$ correspond à l'instant de fin de la phase P4. Par ailleurs, le mode de fonctionnement choisi lors de l'étape E05 du mode de mise en œuvre illustré sur la figure 4 est le second mode de fonctionnement.

Comme cela est visible sur la figure 4, les couples $T_{ice}$ et $T_{hsg}$ augmentent en réponse à une diminution du couple $T_{mep}$. Du fait des différences entre le rapport de transmission $R_{EV1}$ et $R_{ICE2}$, les augmentations des couples $T_{ice}$ et $T_{hsg}$ viennent compenser intégralement la diminution du couple $T_{mep}$. De la sorte, la puissance $P_7$ et le couple $T_7$ sont restés sensiblement constants au cours de la phase P1, de sorte qu'aucun trou d'accélération ne devrait être ressenti par les utilisateurs du véhicule. En outre, les étapes E03, E06 et E08 de calcul de plusieurs triplets de cibles permettent de mettre en œuvre différentes dynamiques de bascule du couple, lorsque cela est nécessaire, depuis l'arbre 6 vers l'arbre 5. En l'espèce, on commence à annuler et compenser le couple de l'arbre 6 selon une dynamique lente jusqu'à un point de fonctionnement permettant la mise en œuvre d'une annulation et d'une compensation du couple restant de l'arbre 6 selon une dynamique rapide, puis on annule et on compense le couple restant de l'arbre 6 selon cette dynamique rapide.

En outre, les puissances cibles sont déterminées en fonction du choix d'un mode de fonctionnement du groupe motopropulseur 1. Si le conducteur souhaite une conduite économe en carburant, silencieuse et peu polluante, il choisira le premier mode de fonctionnement. Si, à l'inverse, le conducteur souhaite préserve l'état de charge de la batterie de stockage électrique du véhicule, il choisira le second mode de fonctionnement. Le choix du mode de fonctionnement peut également être mis en œuvre par un ordinateur du véhicule, tenant compte de paramètres de fonctionnement du véhicule tel que l'état de charge de la batterie, le point de fonctionnement des actionneurs du groupe motopropulseur 1, un niveau de bruit émis par le groupe motopropulseur admissible, etc.

Au vu de ce qui précède, le procédé selon l'invention permet de minimiser le temps de changement de rapport de vitesse tout en évitant l'apparition de désagréments pour les utilisateurs tels que des trous d'accélérations.

**Revendications**

**1.** Procédé de pilotage d'un groupe motopropulseur (1) de véhicule automobile comprenant un moteur à combustion interne (2), une machine électrique principale (3), une machine électrique secondaire (4) et au moins une boîte de vitesses à crabots pilotés comprenant un premier arbre primaire (5) connecté mécaniquement avec le moteur à combustion interne et avec la machine électrique secondaire, un second arbre primaire (6) connecté mécaniquement avec la machine électrique principale et pouvant être connecté mécaniquement avec un arbre secondaire (7), le procédé comprenant une première phase (P1) de bascule du couple du second arbre primaire sur le premier arbre primaire, une deuxième phase (P2) de désengagement d'un rapport de transmission électrique d'un rapport d'entrée, une troisième phase (P3) de synchronisation du régime de rotation ($\omega_{mep}$) de la machine électrique principale, une quatrième phase (P4) d'engagement d'un rapport de transmission électrique d'un rapport de sortie, et une cinquième phase (P5) de bascule du couple du premier arbre primaire sur le second arbre primaire,
**caractérisé en ce que** la première phase comprend une première étape (E03) de calcul d'une première valeur cible ($P_{ice\_cible\_e03}$) de puissance et une deuxième étape (E04) d'augmentation de la puissance ($P_{ice}$) délivrée par le moteur à combustion interne jusqu'à la première valeur cible, la première valeur cible étant déterminée de telle sorte que, à la fin de la deuxième étape, la puissance ($P_{mep}$) délivrée par la machine électrique principale peut être entièrement compensée par une augmentation de la puissance ($P_{hsg}$) délivrée par la machine électrique secondaire.

2. Procédé selon la revendication 1 dans lequel, au cours de la deuxième étape (E04), l'on diminue la puissance ($P_{mep}$) délivrée par la machine électrique principale, le taux de diminution de la puissance délivrée par la machine électrique principale étant sensiblement égal au taux d'accroissement de la puissance ($P_{ice}$) délivrée par le moteur à combustion interne.

3. Procédé selon la revendication 1 ou 2 dans lequel, lors de la première étape (E03), on détermine en outre la puissance supplémentaire ($P_{hsg\_pot}$) pouvant être délivrée par la machine électrique secondaire et on met en œuvre la deuxième étape (E04) seulement si ladite puissance supplémentaire ($P_{hsg\_pot}$) déterminée est strictement inférieure à une puissance ($P_{mep\_no}$) à réaliser par la machine électrique principale si aucun changement de rapport n'est demandé.

4. Procédé selon l'une quelconque des revendications 1 à 3 dans lequel, lors de la première étape (E03), on détermine la première valeur cible ($P_{ice\_cible\_e03}$) en appliquant la formule :

$$P_{ice\_cible\_e03} = P_{mep\_no} + P_{ice\_no} - P_{hsg\_pot}$$

où $P_{ice\_cible\_e03}$ désigne la première valeur cible,
$P_{mep\_no}$ désigne la puissance à réaliser par la machine électrique principale si aucun changement de rapport n'est demandé,
$P_{ice\_no}$ désigne la puissance à réaliser par le moteur à combustion interne si aucun changement de rapport n'est demandé, et
$P_{hsg\_pot}$ désigne la puissance supplémentaire pouvant être délivrée par la machine électrique secondaire.

5. Procédé selon l'une quelconque des revendications 1 à 4 dans lequel, lors de la seconde étape (E04), on augmente le couple ($T_{ice}$) du moteur à combustion interne à un taux d'accroissement égal au taux maximal d'accroissement ($Tx_{ice\_max}$) du couple du moteur à combustion interne.

6. Procédé selon l'une quelconque des revendications 1 à 5, dans lequel ladite première phase (P1) comprend une troisième étape (E06, E08) de calcul d'une deuxième valeur cible ($P_{ice\_cible\_e06}$, $P_{ice\_cible\_e08}$) de puissance délivrée par le moteur à combustion interne, d'une troisième valeur cible ($P_{mep\_cible\_e06}$, $P_{mep\_cible\_e08}$) de puissance délivrée par la machine électrique principale et d'une quatrième valeur cible ($P_{hsg\_cible\_e06}$, $P_{hsg\_cible\_e08}$) de puissance délivrée par la machine électrique secondaire.

7. Procédé selon la revendication 6 dans lequel, lors de ladite troisième étape (E06), on détermine les valeurs cibles ($P_{ice\_cible\_e06}$, $P_{mep\_cible\_e06}$, $P_{hsg\_cible\_e06}$) en appliquant les relations suivantes :

$$P_{ice\_cible\_e06} = P_{ice\_cible\_e03},$$

$$P_{hsg\_cible\_e06} = P_{hsg\_max},$$

et

$$P_{mep\_cible\_e06} = 0,$$

où $P_{ice\_cible\_e06}$ désigne la deuxième valeur cible,
$P_{mep\_cible\_e06}$ désigne la troisième valeur cible,
$P_{hsg\_cible\_e06}$ désigne la quatrième valeur cible,
$P_{hsg\_max}$ désigne la puissance mécanique maximale pouvant être fournie par la machine électrique secondaire, et
$P_{ice\_cible\_e03}$ désigne la première valeur cible.

8. Procédé selon la revendication 6 dans lequel, lors de ladite troisième étape (E08), on détermine les valeurs cibles ($P_{ice\_cible\_e08}$, $P_{mep\_cible\_e08}$, $P_{hsg\_cibla\_e08}$) en appliquant les relations suivantes :

$$P_{ice\_cible\_e08} = \min(P_{ice\_\max}, P_{ice\_no} + P_{mep\_no}),$$

$$P_{mep\_cible\_e08} = 0,$$

$$P_{hsg\_cible\_e08} = P_{roue} - P_{ice\_cible\_e08},$$

et

où $P_{ice\_cible\_e08}$ désigne la deuxième valeur cible,

$P_{mep\_cible\_e08}$ désigne la troisième valeur cible,

$P_{hsg\_cible\_e08}$ désigne la quatrième valeur cible,

$P_{ice\_no}$ désigne la puissance à réaliser par le moteur à combustion interne si aucun changement de rapport n'est demandé,

$P_{mep\_no}$ désigne la puissance à réaliser par la machine électrique principale si aucun changement de rapport n'est demandé,

$P_{ice\_max}$ désigne la puissance mécanique maximale pouvant être fournie par le moteur à combustion interne, et

$P_{roues}$ désigne la consigne de puissance à fournir aux roues par le groupe motopropulseur.

9. Procédé selon l'une quelconque des revendications 6 à 8 dans lequel, lors de la troisième étape (E06, E08), on détermine la deuxième valeur cible($P_{ice\_cible\_e06}$, $P_{ice\_cible\_e08}$), la troisième valeur cible ($P_{mep\_cible\_e06}$, $P_{mep\_cible\_e08}$) et la quatrième valeur cible ($P_{hsg\_cible\_e06}$, $P_{hsg\_cible\_e08}$), en mettant en œuvre un système d'équations, et dans lequel on choisit (E05) ledit système d'équations parmi au moins deux systèmes d'équations distincts, le choix du système d'équations étant mis en œuvre en fonction d'au moins un critère choisi parmi un état de charge d'une batterie électrique de stockage du véhicule et un niveau de bruit maximum du moteur à combustion interne.

10. Procédé selon l'une quelconque des revendications 6 à 9 dans lequel la première phase (P1) comprend une quatrième étape (E07, E09) d'ajustement des puissances ($P_{ice}$, $P_{mep}$, $P_{hsg}$) délivrées par le moteur à combustion interne, la machine électrique principale et la machine électrique secondaire jusqu'aux deuxième, troisième, et quatrième valeurs cibles ($P_{ice\_cible\_e06}$, $P_{ice\_cible\_e08}$, $P_{mep\_cible\_e06}$, $Pmep\_cible\_e08$, $P_{hsg\_cible\_e06}$, $P_{hsg\_cible\_e08}$) respectives, et dans lequel lors de la quatrième étape (E07, E09), l'on diminue la puissance ($P_{mep}$) délivrée par la machine électrique principale à un taux de variation égal au taux maximal de diminution ($Tx_{ice\_max}$) du couple de la machine électrique principale.

## Patentansprüche

1. Verfahren zur Steuerung eines Antriebsstrangs (1) eines Kraftfahrzeugs, umfassend einen Verbrennungsmotor (2), eine elektrische Hauptmaschine (3), eine sekundäre elektrische Maschine (4) und mindestens ein Getriebe mit gesteuerten Klauen, umfassend eine erste Primärwelle (5), die mechanisch mit dem Verbrennungsmotor und mit der sekundären elektrischen Maschine verbunden ist, eine zweite Primärwelle (6), die mechanisch mit der elektrischen Hauptmaschine verbunden ist und mechanisch mit einer Sekundärwelle (7) verbunden werden kann, das Verfahren umfassend eine erste Phase (P1) zum Umschalten des Drehmoments von der zweiten Primärwelle auf die erste Primärwelle, eine zweite Phase (P2) zum Ausrücken eines elektrischen Übersetzungsverhältnisses eines Eingangsverhältnisses, eine dritte Phase (P3) zur Synchronisation der Drehzahl ($\omega_{mep}$) der elektrischen Hauptmaschine, eine vierte Phase (P4) zum Einrücken eines elektrischen Übersetzungsverhältnisses eines Ausgangsverhältnisses und eine fünfte Phase (P5) zum Umschalten des Drehmoments von der ersten Primärwelle auf die zweite Primärwelle, **dadurch gekennzeichnet, dass** die erste Phase einen ersten Schritt (E03) zur Berechnung eines ersten Zielwerts ($P_{ice\_Ziel\_e03}$) der Leistung umfasst und einen zweiten Schritt (E04) zur Erhöhung der von dem Verbrennungsmotor abgegebenen Leistung ($P_{ice}$) bis auf den ersten Zielwert, wobei der erste Zielwert so bestimmt wird, dass am Ende des zweiten Schritts die von der elektrischen Hauptmaschine abgegebene Leistung ($P_{mep}$) vollständig durch eine Erhöhung der von der sekundären elektrischen Maschine abgegebenen Leistung ($P_{hsg}$) kompensiert werden kann.

2. Verfahren nach Anspruch 1, bei dem während des zweiten Schritts (E04) die von der elektrischen Hauptmaschine abgegebene Leistung (Pmep) verringert wird, wobei die Verringerungsrate der von der elektrischen Hauptmaschine abgegebenen Leistung im Wesentlichen gleich der Steigerungsrate der von dem Verbrennungsmotor abgegebenen Leistung (P ice) ist.

**3.** Verfahren nach Anspruch 1 oder 2, bei dem während des ersten Schritts (E03) ferner die zusätzliche Leistung ($P_{hsg\_pot}$) bestimmt wird, die von der sekundären elektrischen Maschine abgegeben werden kann, und der zweite Schritt (E04) nur durchgeführt wird, wenn die bestimmte zusätzliche Leistung ($P_{hsg\_pot}$) strikt kleiner als eine Leistung ($P_{mep\_no}$) ist, die von der elektrischen Hauptmaschine zu realisieren ist, wenn kein Gangwechsel gefordert wird.

**4.** Verfahren nach einem der Ansprüche 1 bis 3, bei dem während des ersten Schritts (E03) der erste Zielwert ($P_{ice\_Ziel\_e03}$) in Anwendung der folgenden Formel bestimmt wird:

$$P_{ice\_Ziel\_e03} = P_{mep\_no} + P_{ice\_no} - P_{hsg\_pot}$$

wobei $P_{ice\_Ziel\_e03}$ den ersten Zielwert bezeichnet,
$P_{mep\_no}$ die Leistung bezeichnet, die von der elektrischen Hauptmaschine zu realisieren ist, wenn kein Gangwechsel gefordert wird;
$P_{ice\_no}$ die Leistung bezeichnet, die von dem Verbrennungsmotor zu realisieren ist, wenn kein Gangwechsel gefordert wird, und
$P_{hsg\_pot}$ die zusätzliche Leistung bezeichnet, die von der sekundären elektrischen Maschine abgegeben werden kann.

**5.** Verfahren nach einem der Ansprüche 1 bis 4, bei dem während des zweiten Schritts (E04) das Drehmoment ($T_{ice}$) des Verbrennungsmotors mit einer Steigerungsrate gleich der maximalen Steigerungsrate ($Tx_{ice\_max}$) des Drehmoments des Verbrennungsmotors erhöht wird.

**6.** Verfahren nach einem der Ansprüche 1 bis 5, bei dem die erste Phase (P1) einen dritten Schritt (E06, E08) zur Berechnung eines zweiten Zielwertes ($P_{ice\_Ziel\_e06}$, $P_{ice\_Ziel\_e08}$) der von dem Verbrennungsmotor abgegebenen Leistung, eines dritten Zielwerts ($P_{mep\_Ziel\_e06}$, $P_{mep\_Ziel\_e08}$) der von der Hauptmaschine abgegebenen Leistung und eines vierten Zielwerts ($P_{hsg\_Ziel\_e06}$, $P_{hsg\_Ziel\_e08}$) der von der sekundären elektrischen Maschine abgegebenen Leistung umfasst.

**7.** Verfahren nach Anspruch 6, bei dem während des dritten Schritts (E06) die Zielwerte ($P_{ice\_Ziel\_e06}$, $P_{mep\_Ziel\_e06}$, $P_{hsg\_Ziel\_e06}$) in Anwendung der folgenden Beziehungen bestimmt werden:

$$P_{ice\_Ziel\_e06} = P_{ice\_Ziel\_e03},$$

$$P_{hsg\_Ziel\_e06} = P_{hsg\_max},$$

und

$$P_{mep\_Ziel\_e06} = 0,$$

wobei $P_{ice\_Ziel\_e06}$ den zweiten Zielwert bezeichnet,
$P_{mep\_Ziel\_e06}$ den dritten Zielwert bezeichnet,
$P_{hsg\_Ziel\_e06}$ den vierten Zielwert bezeichnet,
$P_{hsg\_max}$ die maximale mechanische Leistung bezeichnet, die von der sekundären elektrischen Maschine bereitgestellt werden kann, und
$P_{ice\_Ziel\_e03}$ den ersten Zielwert bezeichnet.

**8.** Verfahren nach Anspruch 6, bei dem während des dritten Schritts (E08) die Zielwerte ($P_{ice\_Ziel\_e08}$, $P_{mep\_Ziel\_e08}$, $P_{hsg\_Ziel\_e08}$) in Anwendung der folgenden Beziehungen bestimmt werden:

$$P_{ice\_Ziel\_e08} = \min(P_{ice\_max}, P_{ice\_no} + P_{mep\_no}),$$

$$P_{mep\_Ziel\_e08} = 0,$$

$$P_{hsg\_Ziele\_e08} = P_{Rad} - P_{ice\_Ziel\_e08},$$

und

**wobei** $P_{ice\_Ziel\_e08}$ den zweiten Zielwert bezeichnet,
$P_{mep\_Ziel\_e08}$ den dritten Zielwert bezeichnet,
$P_{hsg\_Ziel\_e08}$ den vierten Zielwert bezeichnet,
$P_{ice\_no}$ die Leistung bezeichnet, die von dem Verbrennungsmotor zu realisieren ist, wenn kein Gangwechsel gefordert wird,
$P_{mep\_no}$ die Leistung bezeichnet, die von der elektrischen Hauptmaschine zu realisieren ist, wenn kein Gangwechsel gefordert wird;
$P_{ice\_max}$ die maximale mechanische Leistung bezeichnet, die von dem Verbrennungsmotor bereitgestellt werden kann, und $P_{Räder}$ den Leistungssollwert bezeichnet, der den Rädern vom Antriebsstrang bereitzustellen ist.

9. Verfahren nach einem der Ansprüche 6 bis 8, bei dem während des dritten Schritts (E06, E08) der zweite Zielwert ($P_{ice\_Ziel\_e06}$, $P_{ice\_Ziel\_e08}$), der dritte Zielwert ($P_{mep\_Ziel\_e06}$), $P_{mep\_Ziel\_e08}$) und der vierte Zielwert ($P_{hsg\_Ziel\_e06}$, $P_{hsg\_Ziel\_e08}$) bestimmt werden, indem ein Gleichungssystem durchgeführt wird und bei dem das Gleichungssystem aus mindestens zwei verschiedenen Gleichungssystemen gewählt wird (E05), wobei die Wahl des Gleichungssystems in Abhängigkeit von mindestens einem Kriterium durchgeführt wird, das aus einem Ladezustand einer elektrischen Speicherbatterie des Fahrzeugs und einem maximalen Geräuschpegel des Verbrennungsmotors gewählt ist.

10. Verfahren nach einem der Ansprüche 6 bis 9, bei dem die erste Phase (P1) einen vierten Schritt (E07, E09) zur Anpassung der von dem Verbrennungsmotor, der elektrische Hauptmaschine und der sekundären elektrischen Maschine abgegebenen Leistungen ($P_{ice}$, $P_{mep}$, $P_{hsg}$) bis auf jeweilige zweite, dritte und vierte Zielwerte ($P_{ice\_Ziel\_e06}$, $P_{ice\_Ziel\_e08}$, $P_{mep\_Ziel\_e06}$, $P_{mep\_Ziel\_e08}$, $P_{hsg\_Ziel\_e06}$, $P_{hsg\_Ziel\_e08}$) umfasst und bei dem während des vierten Schritts (E07, E09) die von der elektrischen Hauptmaschine abgegebene Leistung ($P_{mep}$) mit einer Änderungsrate gleich der maximalen Verringerungsrate ($Tx_{ice\_max}$) des Drehmoments der elektrischen Hauptmaschine verringert wird.

## Claims

1. Method for controlling a motor vehicle power train (1) comprising an internal combustion engine (2), a main electric machine (3), a secondary electric machine (4) and at least one dog gearbox comprising a first primary shaft (5) mechanically connected to the internal combustion engine and to the secondary electric machine, a second primary shaft (6) mechanically connected to the main electric machine and that can be mechanically connected to a secondary shaft (7), the method comprising a first phase (P1) of switching torque from the second primary shaft to the first primary shaft, a second phase (P2) of disengaging an electric transmission ratio for an input ratio, a third phase (P3) of synchronizing the rotational speed ($\omega_{mem}$) of the main electric machine, a fourth phase (P4) of engaging an electric transmission ratio for an output ratio, and a fifth phase (P5) of switching torque from the first primary shaft to the second primary shaft, **characterized in that** the first phase comprises a first step (S03) of calculating a first target power value ($P_{ice\_target\_s03}$) and a second step (S04) of increasing the power ($P_{ice}$) delivered by the internal combustion engine to the first target value, the first target value being determined so that, at the end of the second step, the power ($P_{mem}$) delivered by the main electric machine can be completely compensated for by an increase of the power ($P_{hsg}$) delivered by the secondary electric machine.

2. Method according to Claim 1 in which, during the second step (S04), the power ($P_{mem}$) delivered by the main electric machine is reduced, the rate of reduction of the power delivered by the main electric machine being substantially equal to the rate of increase of the power ($P_{ice}$) delivered by the internal combustion engine.

3. Method according to Claim 1 or 2 in which, during the first step (S03), the additional power ($P_{hsg\_pot}$) that can be delivered by the secondary electric machine is also determined and the second step (S04) is only implemented if said additional power ($P_{hsg\_pot}$) determined is strictly less than a power ($P_{mem\_no}$) to be produced by the main electric machine if no ratio change is requested.

4. Method according to any one of Claims 1 to 3 in which, during the first step (S03), the first target value ($P_{ice\_target\_s03}$) is determined by applying the formula:

$$P_{ice\_target\_s03} \;=\; P_{mem\_no} \;+\; P_{ice\_no} \;-\; P_{hsg\_pot}$$

where $P_{ice\_target\_s03}$ denotes the first target value,
$P_{mem\_no}$ denotes the power to be produced by the main electric machine if no ratio change is requested,
$P_{ice\_no}$ denotes the power to be produced by the internal combustion engine if no ratio change is requested, and
$P_{hsg\_pot}$ denotes the additional power that can be delivered by the secondary electric machine.

5. Method according to any one of Claims 1 to 4 in which, during the second step (S04), the torque ($T_{ice}$) from the internal combustion engine is increased at a rate of increase equal to the maximum rate of increase ($Rt_{ice\_max}$) of the torque from the internal combustion engine.

6. Method according to any one of Claims 1 to 5 in which said first phase (P1) comprises a third step (S06, S08) of calculating a second target value ($P_{ice\_target\_s06}$, $P_{ice\_target\_s08}$) for the power delivered by the internal combustion engine, a third target value ($P_{mem\_target\_s06}$, $P_{mem\_target\_s08}$) for the power delivered by the main electric machine and a fourth target value ($P_{hsg\_target\_s06}$, $P_{hsg\_target\_s08}$) for the power delivered by the secondary electric machine.

7. Method according to Claim 6 in which, during said third step (S06), the target values ($P_{ice\_target\_s06}$, $P_{mem\_target\_s06}$, $P_{hsg\_target\_s06}$) are determined by applying the following equations:

$$P_{ice\_target\_s06} \;=\; P_{ice\_target\_s03},$$

$$P_{hsg\_target\_s06} \;=\; P_{hsg\_max},$$

and

$$P_{mem\_target\_s06} \;=\; 0,$$

where $P_{ice\_target\_s06}$ denotes the second target value,
$P_{mem\_target\_s06}$ denotes the third target value,
$P_{hsg\_target\_s06}$ denotes the fourth target value,
$P_{hsg\_max}$ denotes the maximum mechanical power that can be supplied by the secondary electric machine, and
$P_{ice\_target\_s03}$ denotes the first target value.

8. Method according to Claim 6 in which, during said third step (S08), the target values ($P_{ice\_target\_s08}$, $P_{mem\_target\_s08}$, $P_{hsg\_target\_s08}$) are determined by applying the following equations:

$$P_{ice\_target\_s08} \;=\; \min(P_{ice\_max},\; P_{ice\_no} \;+\; P_{mem\_no}),$$

$$P_{mem\_target\_s08} \;=\; 0,$$

$$P_{hsg\_target\_s08} \;=\; P_{wheel} \;-\; P_{ice\_target\_s08},$$

and

where $P_{ice\_target\_s08}$ denotes the second target value,
$P_{mem\_target\_s08}$ denotes the third target value,
$P_{hsg\_target\_s08}$ denotes the fourth target value,
$P_{ice\_no}$ denotes the power to be produced by the internal combustion engine if no ratio change is requested,
$P_{mem\_no}$ denotes the power to be produced by the main electric machine if no ratio change is requested,
$P_{ice\_max}$ denotes the maximum mechanical power that can be supplied by the internal combustion engine, and
$P_{wheels}$ denotes the power setpoint to be supplied to the wheels by the power train.

9. Method according to any one of Claims 6 to 8 in which, during the third step (S06, S08), the second target value ($P_{ice\_target\_s06}$, $P_{ice\_target\_s08}$), the third target value ($P_{mem\_target\_s06}$, $P_{mem\_target\_s08}$) and the fourth target value ($P_{hsg\_target\_s06}$, $P_{hsg\_target\_s08}$) are determined, by implementing a system of equations, and in which said system of equations is selected (S05) from at least two different systems of equations, the selection of the system of equations being implemented depending on at least one criterion selected from a state of charge of an electric storage battery of the vehicle and a maximum noise level of the internal combustion engine.

10. Method according to any one of Claims 6 to 9 in which the first phase (P1) comprises a fourth step (S07, S09) of adjusting the powers ($P_{ice}$, $P_{mem}$, $P_{hsg}$) delivered by the internal combustion engine, the main electric machine and the secondary electric machine to the second, third, and fourth target values ($P_{ice\_target\_s06}$, $P_{ice\_target\_s08}$, $P_{mem\_target\text{-}s06}$, $P_{mem\_target\_s08}$, $P_{hsg\_target\_s06}$, $P_{hsg\_target\_s08}$) respectively, and in which during the fourth step (S07, S09), the power ($P_{mem}$) delivered by the main electric machine is reduced at a rate of change equal to the maximum rate of reduction ($Rt_{ice\_max}$) of the torque from the main electric machine.

# FIG.1

# FIG.2

# FIG.3

# FIG.4

**EP 3 691 922 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- FR 3007696
- FR 3022495